# EUROPÄISCHE PATENTSCHRIFT

(11) **EP 1 283 620 B1**
(45) Veröffentlichungstag und Bekanntmachung des Hinweises auf die Patenterteilung: **06.09.2006**
(21) Anmeldenummer: 02102014.4
(22) Anmeldetag: 09.07.2002
(51) Int. Cl.: H04L 29/06, H04Q 11/00

(54) **Vorrichtung und Verfahren zur Client-Registrierung in einem automatisch schaltbaren optischen Netz**
Device and method for client registration in an automatically switchable optical network
Dispositif et méthode pour l'enregistrement de client dans un réseau optique automatiquement commutable

(30) Priorität: 09.08.2001 DE 10139157
(43) Veröffentlichungstag der Anmeldung: 12.02.2003
(73) Patentinhaber: SIEMENS AKTIENGESELLSCHAFT, 80333 München (DE)
(72) Erfinder: Charzinski, Joachim, 85764, Oberschleissheim (DE); Pauluhn, Uwe, 81477, München (DE); Stilling, Bernd, 81379, München (DE)

(56) Entgegenhaltungen:
- WO-A-02/15442
- XUE Y; LAZER M; ET AL: "Carrier Optical Services Requirements <draft-ietf-ipo-carrier-requirements-00.tx t>" INTERNET DRAFT, Juli 2001 (2001-07), XP002268130
- HAAS R ET AL: "PNNI Augmented Routing (PAR) and Proxy-PAR" COMPUTER NETWORKS, ELSEVIER SCIENCE PUBLISHERS B.V., AMSTERDAM, NL, Bd. 34, Nr. 3, September 2000 (2000-09), Seiten 399-418, XP004304729 ISSN: 1389-1286
- PRZYGIENDA T ET AL: "PROXY PNNI AUGMENTED ROUTING (PROXY PAR)" 1998 1ST. IEEE INTERNATIONAL CONFERENCE ON ATM. ICATM'98. CONFERENCE PROCEEDINGS. COLMAR, FRANCE, JUNE 22 - 24, 1998, IEEE INTERNATIONAL CONFERENCE ON ATM, NEW YORK, NY: IEEE, US, 22. Juni 1998 (1998-06-22), Seiten 371-377, XP000977459 ISBN: 0-7803-4982-2
- SANCHEZ-LOPEZ S ET AL: "PNNI-based control plane for automatically switched optical networks" JOURNAL OF LIGHTWAVE TECHNOLOGY, NOV. 2003, IEEE, USA, Bd. 21, Nr. 11, Seiten 2673-2682, XP002268128 ISSN: 0733-8724

## Beschreibung

Die Erfindung betrifft ein optisches Nachrichtennetzwerk gemäß Oberbegriff des Anspruchs 1, eine Netzknoten- und eine Sende-/Empfangseinrichtung zur Verwendung in einem derartigen Nachrichtennetzwerk, sowie ein optisches Nachrichtenübermittlungsverfahren gemäß Oberbegriff des Anspruchs 19.

Optische Nachrichtennetzwerke weisen im allgemeinen mehrere Sende-/Empfangseinrichtungen, z.B. mehrere Teilnehmeranschluß- oder Clienteinrichtungen auf, die jeweils über eine oder mehrere Lichtwellenleiter an jeweils eine von mehreren Netzknoteneinrichtungen angeschlosssen sind. Die Netzknoteneinrichtungen sind über ein Netz aus Lichtwellenleiter miteinander verbunden, sodaß - unter Zwischenschaltung mehrerer miteinander verbundener Netzknoteneinrichtungen - mittels entsprechender optischer Signale Daten zwischen den Sende-/Empfangseinrichtungen ausgetauscht werden können.

Die Datenübertragung innerhalb des Nachrichtennetzwerks kann beispielsweise mit Hilfe von optischen WDM-Binärsignalen erfolgen ("WDM" = wavelength division multiplex bzw. Wellenlängen-Multiplex). Dabei werden über einen einzigen Lichtwellenleiter mehrere, wellenlängengemultiplexte, gepulste optische Signale übertragen.

Bei den derzeit im Betrieb befindlichen Nachrichtennetzwerken werden die innerhalb des Netzes jeweils verwendeten Datenverbindungen nicht von den Clienteinrichtungen selbst eingerichtet, sondern von einer zentralen Steuereinrichtung bzw. von einem zentralen Netzmanagement.

Im Gegensatz hierzu können bei sog. ASON-Netzen (ASON = automatically switched optical network bzw. automatisch vermittelndes optisches Netzwerk) die Clienteinrichtung selbständig Verbindungen zu anderen Clienteinrichtungen aufbauen. Hierzu werden über einen Signalisierkanal entsprechende (Verbindungsaufbau-)Signalisiersignale zwischen der jeweiligen Clienteinrichtung, und einer mit dieser verbundenen Netzknoteneinrichtung ausgetauscht. Die Übermittlung der eigentlichen Nutzdaten erfolgt über einen separaten Nutzdatenkanal

Der Aufbau eines derartigen ASON-Netzes sowie Verfahren zum Bereitstellen verschiedenster Dienste für ein solches optisches Netz werden beispielsweise im Internet Draft "Carrier Optical Services Requirements <draft-ietf-ipo-carrier-requirements-00.txt>", Juli 2001 von Y. Xue, M. Lazer et al. erläutert.

Die optische Netzadresse einer bestimmten Clienteinrichtung im Adressraum des optischen Nachrichtennetzwerks ist den übrigen Clienteinrichtungen nicht bekannt. Deshalb sind die Clienteinrichtungen über einen weiteren Signalisierkanal mit einer zentralen Adreßverwaltungseinrichtung gekoppelt, in der für sämtliche Clienteinrichtungen die jeweils gültigen Netzadressen abgespeichert sind. Vor dem Aufbau einer Datenverbindung von der jeweiligen Clienteinrichtung aus wird von dieser zunächst mittels entsprechender Signalisiersignale von der Adreßverwaltungseinrichtung die optische Netzadresse derjenigen Clienteinrichtung abgefragt, zu der eine Datenverbindung aufgebaut werden soll.

Die Erfindung hat zur Aufgabe, ein neuartiges optisches Nachrichtennetzwerk, eine neuartige Netzknoten-Einrichtung zur Verwendung in einem optischen Nachrichtennetzwerk, sowie ein neuartiges optisches Nachrichtenübermittlungsverfahren zur Verfügung zu stellen.

Sie erreicht dieses und weitere Ziele durch die Gegenstände der Ansprüche 1, 17 und 18.

Vorteilhafte Weiterbildungen der Erfindung sind in den Unteransprüchen angegeben.

Gemäß einem Grundgedanken der Erfindung wird ein optisches Nachrichtennetzwerk mit mindestens einer ersten und einer zweiten Sende-/Empfangseinrichtung zur Verfügung gestellt, die jeweils an eine von mehreren Netzknoten-Einrichtungen eines optischen Transportnetzes angeschlossen sind, über welches mittels optischer Signale Daten zwischen der ersten und der zweiten Sende-/Empfangseinrichtung ausgetauscht werden können, und mit einer zentralen Registriereinrichtung, in welcher zentral die Registrierung der ersten und zweiten Sende-/Empfangseinrichtung innerhalb des optisches Nachrichtennetzwerks betreffende Daten gespeichert sind, dadurch gekennzeichnet, dass das optische Nachrichtennetzwerk derart ausgestaltet ist, dass zumindest ein Teil der einer Sende-/Empfangseinrichtung zugeordneten Registrierdaten von derjenigen Netzknoten-Einrichtung verwaltet wird, an die die jeweilige Sende-/Empfangseinrichtung angeschlossen ist.

Vorteilhaft können nur die jeweiligen optischen Netzknoten-Einrichtungen die in einer Registrierdatenbank der zentralen Registriereinrichtung gespeicherten Registrierdaten ändern, nicht aber die an die jeweiligen Netzknoten-Einrichtungen angeschlossenen Sende-/Empfangseinrichtungen. Dadurch wird eine gegenüber dem Stand der Technik vereinfachte Verwaltung der Registrierdaten erreicht. Dies ist insbesondere dann von Vorteil, wenn die an die Netzknoten-Einrichtungen angeschlossenen Sende-/Empfangseinrichtungen zu verschiedenen administrativen Einheiten gehören.

Im Folgenden wird die Erfindung anhand mehrerer Ausführungsbeispiele und der beigefügten Zeichnung näher erläutert. In der Zeichnung zeigt:
Figur 1 eine schematische Darstellung eines optischen Nachrichtennetzwerks gemäß dem Stand der Technik;
Figur 2 eine schematische Darstellung eines automatisch vermittelnden optischen Netzes (ASON = automatically switched optical network);
Figur 3 eine schematische Darstellung eines optischen Nachrichtennetzwerks gemäß einem Ausführungsbeispiel der vorliegenden Erfindung;
Figur 4 eine schematische Darstellung des zeitlichen Ablaufs von zwischen einer in Figur 3 gezeigten Clienteinrichtung, einer Netzknoten-Einrichtung, und einer Netzadressen-Verwaltungseinrichtung ausgetauschten Signalisiersignalen.

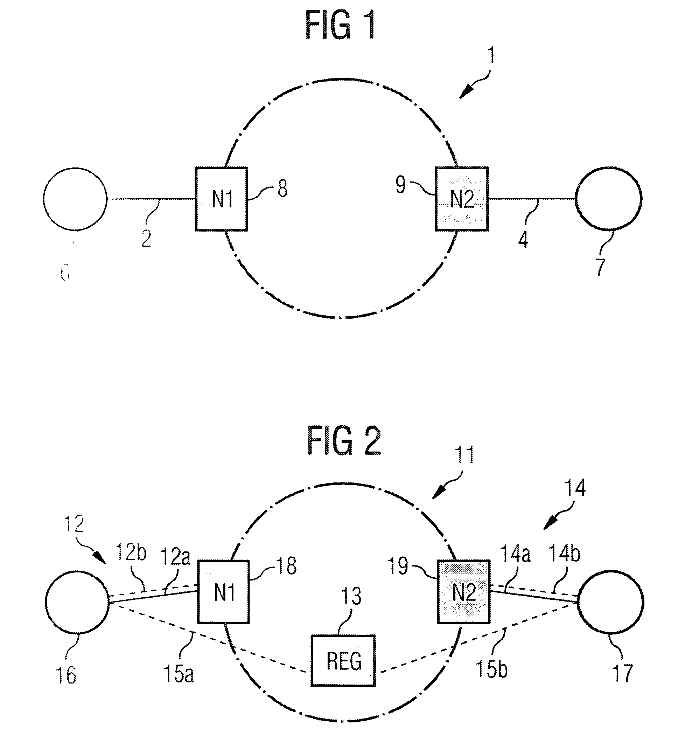

Gemäß Figur 1 weist ein optisches Nachrichtennetzwerk bzw. optisches Transportnetz (OTN) 1 gemäß dem Stand der Technik eine erste und eine zweite Netzknoten-Einrichtung 8, 9 auf, eine Vielzahl weiterer, hier nicht dargestellter Netzknoten-Einrichtungen, eine erste und eine zweite Clienteinrichtung 6, 7, sowie eine Vielzahl weiterer, hier nicht dargestellter Clienteinrichtungen.

Die erste Clienteinrichtung 6 ist über einen Lichtwellenleiter 2 an die erste Netzknoten-Einrichtung 8 angeschlossen. Auf entsprechende Weise ist die zweite Clienteinrichtung 7 über einen Lichtwellenleiter 4 an die zweite Netzknoten-Einrichtung 9 angeschlossen. Die Netzknoten-Einrichtungen 8, 9 (und die o.g. weiteren, hier nicht dargestellten Netzknoten-Einrichtungen) sind innerhalb des optischen Transportnetzes (OTN) 1 über eine Vielzahl von Lichtwellenleitern miteinander verbunden.

Bei dem in Figur 1 gezeigten optischen Transportnetz (OTN) 1 werden die bei der Übertragung von Daten zwischen den einzelnen Netzknoten-Einrichtungen jeweils konkret verwendeten Datenverbindungen - ohne Einfluß der Clienteinrichtungen 6, 7 - von einem zentralen Netzwerkmanagement-System bzw. einer zentralen Steuereinrichtung eingerichtet.

In Figur 2 ist ein automatisch vermittelndes optisches Netz bzw. ASON-Netz 11 (ASON = automatically switched optical network) gezeigt, welches eine Vielzahl von über entsprechende Lichtwellenleiter miteinander verbundene Netzknoten-Einrichtungen 18, 19 aufweist.

Des weiteren weist das ASON-Netz 11 mehrere Clienteinrichtungen 16, 17 auf, die über jeweils einen (oder mehrere, z.B. zwei) Lichtwellenleiter 12, 14 an eine entsprechende Netzknoten-Einrichtung 18, 19 angeschlossen sind. Dabei wird jeweils ein erster Lichtwellenleitungskanal 12a, 14a zum Übertragen von Nutzsignalen, und ein zweiter Lichtwellenleitungskanal 12b, 14b zum Übertragen von z.B. zur Vermittlung der Nutzsignale dienenden Signalisiersignalen verwendet. Bei dem in Figur 2 dargestellten ASON-Netz 11 kann die jeweilige Clienteinrichtung 16 durch Aussenden entsprechender (Verbindungsaufbau-)Signalisiersignale über den Signalsisierkanal 12b, 14b selbständig eine Datenverbindung zu einer anderen Clienteinrichtung 17 aufbauen.

Die optische Netzadresse einer bestimmten Clienteinrichtung 17 im Adressraum des ASON-Netzes 11 ist den übrigen Clienteinrichtungen 16 nicht bekannt. Deshalb sind die erste und zweite Clienteinrichtung 16, 17 jeweils über einen weiteren Signalisierkanal 15a, 15b direkt mit einer zentralen Netzadressenverwaltungseinrichtung 13 gekoppelt, in der für sämtliche Clienteinrichtungen 16, 17 die jeweils gültigen Netzadressen abgespeichert sind.

Vor dem Aufbau einer Datenverbindung wird von der jeweiligen Clienteinrichtung 16 aus zunächst mittels entsprechender über den weiteren Signalisierkanal 15a gesendeter Signalisiersignale von der Netzadressenverwaltungseinrichtung 13 die optische Netzadresse derjenigen Clienteinrichtung 17 abgefragt, zu der hin eine Datenverbindung aufgebaut werden soll.

Zum Aufbau der Datenverbindung wird dann von der jeweiligen Clienteinrichtung 16 über den Signalsisierkanal 12b ein u.a. die o.g. optische Netzadresse der Ziel-Clienteinrichtung 17 enthaltendes Verbindungsaufbau-Signalisiersignal an die entsprechende Netzknoten-Einrichtung 18 gesendet, von wo aus dann die Datenverbindung sukkzessive zu weiteren Netzknoten-Einrichtungen, und schließlich zur Ziel-Clienteinrichtung 17 hin weitergeschaltet wird.

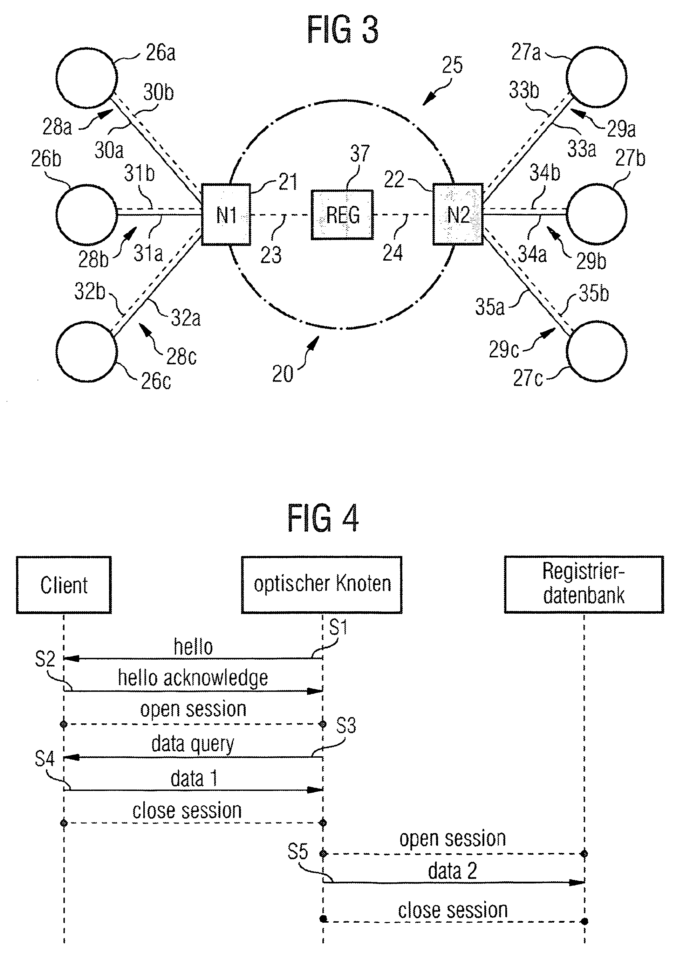

Figur 3 zeigt ein optisches Nachrichtennetzwerk 20 (hier: ein automatisch vermittelndes optisches Netz bzw. ASON-Netz (ASON = automatically switched optical network)) gemäß einem Ausführungsbeispiel der vorliegenden Erfindung. Dieses weist eine Vielzahl von über ein Lichtwellenleiternetz 25 (in der Darstellung gemäß Figur 3 durch eine strichpunktförmige Ellipse veranschaulicht) miteinander verbundene Netzknoten-Einrichtungen 21, 22 auf, sowie eine Vielzahl von Teilnehmeranschluß- oder Clienteinrichtungen 26a, 26b, 26c, 27a, 27b, 27c. Bei diesen kann es sich z.B. jeweils um an weitere, clientseitige Netzwerke angeschlossene SDH-, ATM-, oder IP-Clienteinrichtungen handeln, z.B. um IP-Router (SDH = Synchrone Digitale Hierarchie, ATM = Asynchron Transfer Modus, IP = Internet Protocol).

Innerhalb des Lichtwellenleiternetzes 25 ist jede Netzknoten-Einrichtung 21, 22 über jeweils ein oder mehrere Lichtwellenleiterbündel oder über einen oder mehrere einzelne Lichtwellenleiter mit jeweils einem oder mehreren (z.B. zwei, drei oder vier) weiteren Netzknoten-Einrichtungen 21, 22 verbunden.

Zur Datenübertragung innerhalb des Lichtwellenleiternetzes 25 bzw. des optischen Nachrichtennetzwerks 20 kann z.B. ein WDM-Datenübertragungsverfahren verwendet werden (WDM = wavelength division multiplex bzw. Wellenlängen-Multiplex). Aufgrund des Wellenlängenmultiplexes können über jeden im Netz vorhandenen Lichtwellenleiter unter Nutzung jeweils verschiedener Wellenlängenbereiche gleichzeitig mehrere verschiedene, gepulste optische Binärsignale übertragen werden (die z.B. jeweils zur Datenübertragung zwischen jeweils verschiedenen Clienteinrichtungen 26a, 26b, 26c, 27a, 27b, 27c dienen).

Wie in Figur 3 weiter gezeigt ist, sind eine erste, zweite und dritte Clienteinrichtung 26a, 26b, 26c über entsprechende Client-Schnittstelleneinrichtungen jeweils über einen (oder mehrere) Lichtwellenleiter 28a, 28b, 28c an eine erste Netzknoten-Einrichtung 21 angeschlossen (genauer: an jeweils unterschiedliche Ports der Netzknoten-Einrichtung 21). Auf entsprechende Weise sind eine vierte, fünfte und sechste Clienteinrichtung 27a, 27b, 27c über entsprechende Client-Schnittstelleneinrichtungen jeweils über einen (oder mehrere) Lichtwellenleiter 29a, 29b, 29c an verschiedene Ports der zweiten Netzknoten-Einrichtung 22 angeschlossen.

Zwischen den Clienteinrichtungen 26a, 26b, 26c und der mit diesen verbundenen Netzknoten-Einrichtung 21, und zwischen den Clienteinrichtung 27a, 27b, 27c und der mit diesen verbundenen Netzknoten-Einrichtung 22 wird jeweils ein erster Lichtwellenleitungskanal 30a, 31a, 32a, 33a, 34a, 35a zum Übertragen von Nutzsignalen verwendet (in der Darstellung gemäß Figur 3 durch durchgezogene Linien veranschaulicht), und jeweils ein zweiter Lichtwellenleitungskanal 30b, 31b, 32b, 33b, 34b, 35b zum Übertragen von - im folgenden noch näher erläuterten - Signalisiersignalen (in der Darstellung gemäß Figur 3 durch gestrichelte Linien veranschaulicht).

Die verschiedenen, jeweils parallel verlaufenden Lichtwellenleitungskanäle 30a, 31a, 32a, 33a, 34a, 35a bzw. 30b, 31b, 32b, 33b, 34b, 35b können jeweils über mehrere (z.B. zwei oder drei), verschiedene Lichtwellenleiter geschaltet werden, oder z.B. über ein- und denselben Lichtwellenleiter (z.B. mittels Wellenlängen- oder Zeitmultiplex).

Das optische Nachrichtennetzwerk 20 weist außerdem eine zentrale Netzadressen-Verwaltungseinrichtung 37, z.B Serverrechner eines Netzadressen-Verzeichnisdienstes (REG bzw. Registry) auf, der jeweils über über entsprechende weitere Lichtwellenleiter geführte Lichtwellenleitungskanäle 23, 24 mit entsprechenden Netzknoten-Einrichtungen 21, 22 in Verbindung steht.

Wie bereits oben erwähnt, stehen die Clienteinrichtungen 26a, 26b, 26c, 27a, 27b, 27c über eine entsprechende Client-Schnittstelleneinrichtung (z.B. eine UNI- (User Network Interface-) Schnittstelleneinrichtung) und die o.g. Lichtwellenleiter 28a, 28b, 28c, 29a, 29b, 29c mit den Netzknoten-Einrichtungen 21, 22 in Verbindung - weitere Schnittstelleneinrichtungen (etwa zum Anschluß der Clienteinrichtungen 26a, 26b, 26c, 27a, 27b, 27c an die Netzadressen-Verwaltungseinrichtung 37) sind nicht vorgesehen.

Um zu prüfen, ob an einem bestimmten Port einer Netzknoten-Einrichtung 21 eine Clienteinrichtung 26a angeschlossen ist, wird gemäß Figur 4 von der jeweiligen Netzknoten-Einrichtung 21 über den entsprechenden Lichtwellenleitungskanal 30b mittels entsprechender optischer Binärimpulse ein erstes Signalisiersignal S1 ("hello") ausgesendet.

Ist an dem entsprechenden Port der Netzknoten-Einrichtung 21 gerade eine Clienteinrichtung 26a angeschlossen, wird dies der Netzknoten-Einrichtung 21 dadurch angezeigt, daß die entsprechende Clienteinrichtung 26a in Reaktion auf das Anschluß-Anfrage-Signalsisiersignal S1 über den Lichtwellenleitungskanal 30b ein weiteres Signalisiersignal S2 ("hello acknowledge") an die Netzknoten-Einrichtung 21 sendet.

Erhält die Netzknoten-Einrichtung 21 innerhalb einer vorbestimmten Zeitdauer keine Antwort auf das Anschluß-Anfrage-Signalsisiersignal S1 (z.B. weil an dem jeweiligen Port keine Clienteinrichtung angeschlossen ist) veranlaßt die Netzknoten-Einrichtung 21, daß erneut ein Anschluß-Anfrage-Signalsisiersignal S1 über den entsprechenden Lichtwellenleitungskanal 30b gesendet wird, usw.

Sobald von der Netzknoten-Einrichtung 21 von einer am jeweiligen Port angeschlossenen Clienteinrichtung 26a ein Client-Anschluß-Signalsisiersignal S2 ("hello acknowledge") empfangen wird, wird von der Netzknoten-Einrichtung 21 eine Datenkommunikationsverbindung zur jeweiligen Clienteinrichtung 26a eingerichtet ("open session").

Zur Abfrage von Client-Registrierinformationen wird dann von der Netzknoten-Einrichtung 21 über den Lichtwellenleitungskanal 30b mittels entsprechender optischer Binärimpulse ein weiteres Signalisiersignal S3 ("data query") an die Clienteinrichtung 26a gesendet.

Das Registrierdaten-Anfrage-Signalisiersignal S3 kann Informationen darüber enthalten, welche Client-RegistrierDaten von der Clienteinrichtung 26a an die Netzknoten-Einrichtung 21 übertragen werden sollen (z.B. Daten bzgl. Client-Typ (SDH-, ATM-, IP-Client, etc.), und/oder Client-Schnittstellentyp, und/oder (Zugriffs)Berechtigungen der Clienteinrichtung, und/oder bzgl. einer Client-Kennung, und/oder einer von der Clienteinrichtung verwendeten Wellenlänge, und/oder einer Client-Netzwerkadresse, und/oder der Netzknoten-Einrichtung 21 im clientseitigen Netzwerk zukommenden Eigenschaften (z.B. deren IP-Adresse), etc.). Die von der Clienteinrichtung verwendete Wellenlänge kann z.B. dann abgefragt werden, wenn die Clienteinrichtung nicht über einen für die jeweils gewünschte Wellenlänge sorgenden Transponder an die Netzknoten-Einrichtung 21 angeschlossen ist.

Die jeweiligen Client-Registrierdaten werden aus einer (in Figur 3 nicht dargestellten) Speichereinrichtung der Clienteinrichtung 26a ausgelesen, und über ein über den Lichtwellenleitungskanal 30b übertragenes Signalisiersignal S4 ("data1") an die Netzknoten-Einrichtung 21 weitergeleitet.

Daraufhin wird von der Netzknoten-Einrichtung 21 die bestehende Datenkommunikationsverbindung zur Clienteinrichtung 26a wieder abgebaut ("close session").

Bei einem alternativen, hier nicht dargestellten Ausführungsbeispiel werden aus Sicherheitsgründen die zwischen der Clienteinrichtung 26a und der Netzknoten-Einrichtung 21 (und umgekehrt) ausgetauschten Daten verschlüsselt. Außerdem kann alternativ oder zusätzlich ein Datentaustausch zwischen Client- und Netzknoten-Einrichtung 26a, 21 erst stattfinden, nachdem sich die Clienteinrichtung 26a bei der Netzknoten-Einrichtung 21 authentifiziert hat. Alternativ kann zusätzlich umgekehrt auch eine Authentifizierung der Netzknoten-Einrichtung 21 bei der Clienteinrichtung 26a stattfinden.

Bei einem weiteren alternativen Ausführungsbeispiel weisen eine oder mehrere der Clienteinrichtungen 26a, 26b, 26c, 27a, 27b, 27c keine UNI-Schnittstelle auf (UNI = User Network Interface). Die o.g. Registrierdaten werden dann nicht, wie oben beschrieben, mittels des o.g. Dialogs zwischen der entsprechenden Clienteinrichtung 26a, 26b, 26c, 27a, 27b, 27c und der jeweiligen Netzknoten-Einrichtung 21, 22 von der Clienteinrichtung 26a, 26b, 26c, 27a, 27b, 27c an die jeweilige Netzknoten-Einrichtung 21, 22 übertragen (Signale "hello", "hello acknowledge", "data query", "data1"). Stattdessen werden die jeweiligen Registrierdaten - zentral für mehrere oder sämtliche Clienteinrichtung 26a, 26b, 26c, 27a, 27b, 27c - von einer Netz-Steuereinrichtung bzw. einem zentralen Netz-Managementsystem aus über mehrere separate Lichtwellenleitungskanäle an die jeweilige Netzknoten-Einrichtung 21, 22 übertragen. Alternativ können die jeweiligen Registrierdaten z.B. auch manuell in die entsprechende Netzknoten-Einrichtung 21, 22 eingegeben werden.

In der Netzknoten-Einrichtung 21 werden die (z.B. über das Registrierdaten-Signalisiersignal S4 übertragenen, oder vom zentralen Netz-Managementsystem gesendeten, oder manuell eingegebenen) Registrierdaten um weitere Clientregistrierdaten ergänzt. Diese können z.B. vorab in einer (in Figur 3 nicht dargestellten) Speichereinrichtung der Netzknoten-Einrichtung 21 abgespeichert worden sein, oder können erst nach Empfang des Registrierdaten-Signalisiersignals S4 von einer (nicht dargestellten) Steuereinrichtung der Netzknoten-Einrichtung 21 ermittelt werden (z.B. die Portnummer, an die die Clienteinrichtung 26a angeschlossen ist).

Beispielsweise ist denkbar, daß die Netzknoten-Einrichtung 21 aus den o.g. von der Clienteinrichtung 26a übertragenen Registrierdaten entnehmen kann, welche Client-Registrierdaten (frei) konfigurierbar sind, und welche nicht. Möglich ist z.B., daß die jeweilige Adresse der Clienteinrichtung 26a nicht vorab festgelegt ist, sondern von der Netzknoten-Steureinrichtung vergeben werden kann.

Sobald in der Netzknoten-Einrichtung 21 sämtliche benötigte Registrierdaten vorliegen, wird gemäß Figur 4 von der Netzknoten-Einrichtung 21 eine Datenkommunikationsverbindung zur Netzadressen-Verwaltungseinrichtung 37 eingerichtet ("open session").

Daraufhin wird von der Netzknoten-Einrichtung 21 über den Lichtwellenleitungskanal 23 mittels entsprechender optischer Binärimpulse ein Signalisiersignal S5 ("data2") an die Netzadressen-Verwaltungseinrichtung 37 gesendet. Dieses enthält neben den z.B. von der Clienteinrichtung 26a mittels des Signals S4 an die Netzknoten-Einrichtung 21 übertragenen Registrierdaten die von der Netzknoten-Einrichtung 21 ergänzten weiteren Clientregistrierdaten (z.B. Informationen bzgl. Client-Typ, und/oder Client-Schnittstellentyp, und/oder Zugriffsberechtigungen, und/oder Client-Netzwerkadresse, und/oder der Netzwerkadresse der Netzknoten-Einrichtung, etc.)

Bei einem alternativen, hier nicht dargestellten Ausführungsbeispiel werden aus Sicherheitsgründen die zwischen der Netzknoten-Einrichtung 21 und der Netzadressen-Verwaltungseinrichtung 37 (und umgekehrt) ausgetauschten Daten verschlüsselt. Außerdem kann alternativ oder zusätzlich ein Datentaustausch zwischen Netzadressen- und Netzknoten-Einrichtung 37, 21 erst stattfinden, nachdem sich die Netzknoten-Einrichtung 21 bei der Netzadressen-Verwaltungseinrichtung 37 authentifiziert hat. Alternativ kann zusätzlich umgekehrt auch eine Authentifizierung der Netzadressen-Verwaltungseinrichtung 37 bei der Netzknoten-Einrichtung 21 stattfinden.

Die o.g. Registrierdaten werden unter Zuordnung zur jeweiligen Clienteinrichtung bzw. einer entsprechenden Clientkennung in einer (nicht dargestellten) Speichereinrichtung der Netzadressen-Verwaltungseinrichtung 37 abgespeichert.

Zum Aufbau einer Datenverbindung von z.B. der Clienteinrichtung 27a aus zur Clienteinrichtung 26a wird zunächst mittels entsprechender über den Lichtwellenleitungskanal 33b übertragener optischer Binärimpulse ein (Verbindungsaufbau-Anfrage-) Signalisiersignal an die zweite Netzknoten-Einrichtung gesendet, welches u.a. die o.g. die Ziel-Clienteinrichtung 26a kennzeichnende Kennung enthält (die optische Netzadresse der Ziel-Clienteinrichtung 26a ist der Clienteinrichtung 27a nicht bekannt) .

Daraufhin wird von der Netzknoten-Einrichtung 22 aus über den Lichtwellenleitungskanal 24 ein z.B. die o.g. Kennung der Ziel-Clienteinrichtung 26a, und z.B. eine Kennung der anfragenden Clienteinrichtung 27a enthaltendes (Datenbank-Abfrage-) Signalisiersignal an die Netzadressen-Verwaltungseinrichtung 37 gesendet. Das (Datenbank-Abfrage-) Signalisiersignal kann Informationen darüber enthalten, welche Client-Registrierdaten von der Netzadressen-Verwaltungseinrichtung 37 an die Netzknoten-Einrichtung 22 übertragen werden sollen.

Die jeweiligen Client-Registrierdaten (z.B. die optische Netzadresse der Ziel-Clienteinrichtung 26a, oder z.B. Informationen bzgl. der (Zugriffs)Berechtigungen der anfragenden Clienteinrichtung 27a) werden aus der Speichereinrichtung der Netzadressen-Verwaltungseinrichtung 37 ausgelesen, und über ein über den Lichtwellenleitungskanal 24 übertragenes Signalisiersignal an die Netzknoten-Einrichtung 22 weitergeleitet.

Ist die anfragende Clienteinrichtung 27a zum Zugriff auf das Lichtwellenleiternetz 25 berechtigt, wählt die Netzknoten-Einrichtung 22 (bzw. eine nicht dargestellte Netzknoten-Steuereinrichtung) eine der mit der Netzknoten-Einrichtung 22 verbundenen weiteren Netzknoten-Einrichtungen als diejenige Netzknoten-Einrichtung aus, über die die aufzubauende Verbindung weitergeführt werden soll. Als nächstes wird von der Netzknoten-Steuereinrichtung veranlaßt, daß von der Netzknoten-Einrichtung 22 aus ein u.a. die optische Netzadresse der Ziel-Clienteinrichtung 26a enthaltendes (Verbindungsaufbau-Anfrage-)Signalisiersignal an die ausgewählte weitere Netzknoten-Einrichtung gesendet wird. Diese sendet ein weiteres, dem Verbindungsaufbau-Anfrage-Signalisiersignal entsprechendes Signal an eine weitere Netzknoteneinrichtung, usw.

Auf diese Weise wird sukzessive eine über den Pfad Clienteinrichtung 27a, Netzknoteneinrichtung 22, ..., Netzknoteneinrichtung 21, Clienteinrichtung 26a geführte Datenverbindung zwischen den beiden Clienteinrichtungen 26a, 27a aufgebaut.

Bei den beschriebenen Ausführungsbeispielen wird gegenüber dem Stand der Technik u.a. eine Vereinfachung der Client-Registrierdatenverwaltung erreicht. Dies hat seinen Grund darin, daß jede Netzknoten-Einrichtung 21, 22 jeweils die Registrierdaten der an sie angeschlossenen Clienteinrichtungen verwaltet.

## Patentansprüche

1. Optisches Nachrichtennetzwerk (20) mit mindestens einer ersten und einer zweiten Sende-/Empfangseinrichtung (26a, 27a), die jeweils an eine von mehreren Netzknoten-Einrichtungen (21, 22) eines optischen Transportnetzes (25) angeschlossen sind, über welches mittels optischer Signale Daten zwischen der ersten und der zweiten Sende-/Empfangseinrichtung (26a, 27a) ausgetauscht werden können, und mit einer zentralen Registriereinrichtung (37), in welcher zentral die Registrierung der ersten und zweiten Sende-/Empfangseinrichtung (26a, 27a) innerhalb des optischen Nachrichtennetzwerks (20) betreffende Daten gespeichert sind,
**dadurch gekennzeichnet,**
**dass** das optische Nachrichtennetzwerk (20) derart ausgestaltet ist, dass zumindest ein Teil der einer Sende-/Empfangseinrichtung (26a, 27a) zugeordneten Registrierdaten von derjenigen Netzknoten-Einrichtung (21, 22) verwaltet wird, an die die jeweilige Sende-/Empfangseinrichtung (26a, 27a) angeschlossen ist.

2. Optisches Nachrichtennetzwerk (20) nach Anspruch 1, derart ausgestaltet, dass die jeweilige Sende-/Empfangseinrichtung (26a) über einen Datenkanal (30b) an die entsprechende Netzknoten-Einrichtung (21) angeschlossen ist, und zumindest ein Teil der Registrierdaten über den Datenkanal (30b) von der jeweiligen Sende-/Empfangseinrichtung (26a) an die entsprechende Netzknoten-Einrichtung (21) übertragen wird.

3. Optisches Nachrichtennetzwerk (20) nach Anspruch 1 oder 2, derart ausgestaltet, dass die jeweilige Sende-/Empfangseinrichtung (26a) über einen weiteren Datenkanal (30a) an die entsprechende Netzknoten-Einrichtung (21) angeschlossen ist, über den die eigentlichen Nutzdaten von der jeweiligen Sende-/Empfangseinrichtung (26a) an die entsprechende Netzknoten-Einrichtung (21) übertragen werden.

4. Optisches Nachrichtennetzwerk (20) nach einem der vorhergehenden Ansprüche, derart ausgestaltet, dass zumindest ein Teil der einer Sende-/Empfangseinrichtung (26a, 27a) zugeordneten Registrierdaten von der der jeweiligen Sende-/Empfangseinrichtung (26a, 27a) zugeordneten Netzknoten-Einrichtung (21, 22) generiert wird.

5. Optisches Nachrichtennetzwerk (20) nach einem der vorhergehenden Ansprüche, derart ausgestaltet, dass zumindest ein Teil der einer Sende-/Empfangseinrichtung (26a, 27a) zugeordneten Registrierdaten über einen zusätzlichen Datenkanal von einer zentralen Netz-Steuereinrichtung an die entsprechende Netzknoten-Einrichtung (21, 22) übertragen werden.

6. Optisches Nachrichtennetzwerk (20) nach einem der vorhergehenden Ansprüche, derart ausgestaltet, dass zumindest ein Teil der einer Sende-/Empfangseinrichtung (26a, 27a) zugeordneten Registrierdaten über einen Datenkanal (23) von der jeweiligen Netzknoten-Einrichtung (21, 22) an die zentrale Registriereinrichtung (37) übertragen wird.

7. Optisches Nachrichtennetzwerk (20) nach einem der vorhergehenden Ansprüche, derart ausgestaltet, dass zumindest ein Teil der einer Sende-/Empfangseinrichtung (26a, 27a) zugeordneten Registrierdaten nur von derjenigen Netzknoten-Einrichtung (21, 22) geändert werden kann, an die die jeweilige Sende-/Empfangseinrichtung (26a, 27a) angeschlossen ist.

8. Optisches Nachrichtennetzwerk (20) nach einem der vorhergehenden Ansprüche, derart ausgestaltet, dass zumindest ein Teil der der ersten Sende-/Empfangseinrichtung (26a) zugeordneten Registrierdaten über einen Datenkanal (24) von derjenigen Netzknoten-Einrichtung (22) aus der zentralen Registriereinrichtung (37) ausgelesen werden kann, die der zweiten Sende-/Empfangseinrichtung (26a) zugeordnet ist.

9. Optisches Nachrichtennetzwerk (20) nach einem der vorhergehenden Ansprüche, bei welchem keine direkte Datenverbindung zwischen der jeweiligen Sende-/Empfangseinrichtung (26a, 27a) und der zentralen Registriereinrichtung (37) existiert.

10. Optisches Nachrichtennetzwerk (20) nach einem der vorhergehenden Ansprüche, bei welchem die Registrierdaten Informationen bezüglich der der jeweiligen Sende-/Empfangseinrichtung (26a, 27a) im Adressraum des optischen Transportnetzes (25) zugeordneten optischen Netzadresse enthalten.

11. Optisches Nachrichtennetzwerk (20) nach einem der vorhergehenden Ansprüche, bei welchem die Registrierdaten Informationen bezüglich der Datenzugriffsberechtigung der jeweiligen Sende-/Empfangseinrichtung (26a, 27a) auf innerhalb des optischen Nachrichtennetzwerks (20) gespeicherte Daten enthalten.

12. Optisches Nachrichtennetzwerk (20) nach einem der vorhergehenden Ansprüche, bei welchem die Registrierdaten Informationen bezüglich der Eigenschaften der von der jeweiligen Sende-/Empfangseinrichtung (26a, 27a) ausgesendeten optischen Signale enthalten, insbesondere Informationen bezüglich deren Wellenlänge.

13. Optisches Nachrichtennetzwerk (20) nach einem der vorhergehenden Ansprüche, bei welchem die Registrierdaten Informationen bezüglich der Eigenschaften der jeweiligen Sende-/Empfangseinrichtung (26a, 27a) und/oder einer von dieser verwendeten Schnittstelle enthalten, insbesondere Typ-Informationen zur Sende-/Empfangseinrichtung (26a, 27a) bzw. zur jeweils verwendeten Schnittstelle.

14. Optisches Nachrichtennetzwerk (20) nach einem der vorhergehenden Ansprüche, bei welchem die Registrierdaten Informationen bezüglich der der jeweiligen Netzknoten-Einrichtung (21, 22) in einem weiteren Netzwerk zukommenden Eigenschaften enthält, welches an die der jeweiligen Netzknoten-Einrichtung (21, 22) zugeordnete Sende-/Empfangseinrichtung (26a, 27a) angeschlossen ist.

15. Optisches Nachrichtennetzwerk (20) nach einem der vorhergehenden Ansprüche, bei welchem die erste und/oder die zweite Sende-/Empfangseinrichtung (26a, 27a) eine Teilnehmeranschluss- bzw. eine Clienteinrichtung ist.

16. Optisches Nachrichtennetzwerk (20) nach einem der vorhergehenden Ansprüche, bei welchem die Daten mit Hilfe von wellenlängengemultiplexten optischen Signalen übertragen werden.

17. Netzknoten-Einrichtung (21, 22) für ein optisches Nachrichtennetzwerk (20) nach einem der Ansprüche 1 bis 16 zum Anschließen von Sende-/Empfangseinrichtungen (26a, 27a),
**dadurch gekennzeichnet,**
**dass** Mittel vorgesehen sind zum Verwalten von zumindest einem Teil von Registrierdaten, die der an die Netzknoten-Einrichtung (21, 22) angeschlossenen Sende-/Empfangseinrichtungen (26a, 27a) zugeordnet sind.

18. Optisches Nachrichtenübermittlungsverfahren, wobei mit Hilfe von optischen Signalen Daten von einer ersten Sende-/Empfangseinrichtung (26a) über eine an diese angeschlossene Netzknoten-Einrichtung (21) eines optischen Transportnetzes (25) an eine zweite Sende-/Empfangseinrichtung (27a) übertragen werden, und wobei in einer zentralen Registriereinrichtung (37) auf zentrale Weise die Registrierung der ersten und zweiten Sende-/Empfangseinrichtung (26a, 27a) innerhalb des optischen Nachrichtennetzwerks (20) betreffende Daten gespeichert werden,
**dadurch gekennzeichnet,**
**dass** zumindest ein Teil der einer Sende-/Empfangseinrichtung (26a, 27a) zugeordneten Registrierdaten von derjenigen Netzknoten-Einrichtung (21, 22) verwaltet wird, an die die jeweilige Sende-/Empfangseinrichtung (26a, 27a) angeschlossen ist.

## Claims

1. Optical communications network (20) having at least a first and a second transmission/reception device (26a, 27a) which are respectively connected to one of a plurality of network node devices (21, 22) in an optical transport network (25) via which data can be interchanged between the first and the second transmission/reception device (26a, 27a) using optical signals, and having a central registration device (37) for centrally storing data relating to the registration of the first and second transmission/reception devices (26a, 27a) within Optical communications network (20),
**characterized**
**in that** the optical communications network (20) is designed such that at least some of the registration data associated with a transmission/reception device (26a, 27a) are managed by that network node device (21, 22) to which the respective transmission/reception device (26a, 27a) is connected.

2. Optical communications network (20) according to Claim 1, designed such that the respective transmission/ reception device (26a) is connected to the appropriate network node device (21) via a data channel (30b), and at least some of the registration data are transmitted from the respective transmission/reception device (26a) to the corresponding network node device (21) via the data channel (30b).

3. Optical communications network (20) according to Claim 1 or 2, designed such that the respective transmission/reception device (26a) is connected to the appropriate network node device (21) via a further data channel (30a) via which the actual useful data are transmitted from the respective transmission/reception device (26a) to the corresponding network node device (21).

4. Optical communications network (20) according to one of the preceding claims, designed such that at least some of the registration data associated with a transmission/reception device (26a, 27a) are generated by the network node device (21, 22) associated with the respective transmission/reception device (26a, 27a).

5. Optical communications network (20) according to one of the preceding claims, designed such that at least some of the registration data associated with a transmission/reception device (26a, 27a) are transmitted from a central network control device to the appropriate network node device (21, 22) via an additional data channel.

6. Optical communications network (20) according to one of the preceding claims, designed such that at least some of the registration data associated with a transmission/reception device (26a, 27a) are transmitted from the respective network node device (21, 22) to the central registration device (37) via a data channel (23).

7. Optical communications network (20) according to one of the preceding claims, designed such that at least some of the registration data associated with a transmission/reception device (26a, 27a) can be changed only by that network node device (21, 22) to which the respective transmission/reception device (26a, 27a) is connected.

8. Optical communications network (20) according to one of the preceding claims, designed such that at least some of the registration data associated with the first transmission/reception device (26a) can be read from the central registration device (37) via a data channel (24) by that network node device (22) which is associated with the second transmission/reception device (26a).

9. Optical communications network (20) according to one of the preceding claims, designed such that no direct data link exists between the respective transmission/reception device (26a, 27a) and the central registration device (37).

10. Optical communications network (20) according to one of the preceding claims, designed such that the registration data contain information regarding Optical network address associated with the respective transmission/reception device (26a, 27a) in the address space of Optical transport network (25).

11. Optical communications network (20) according to one of the preceding claims, designed such that the registration data contain information regarding the data access authorization of the respective transmission/reception device (26a, 27a) to data stored within Optical communications network (20).

12. Optical communications network (20) according to one of the preceding claims, designed such that the registration data contain information regarding the properties of Optical signals emitted by the respective transmission/reception device (26a, 27a), particularly information regarding the wavelength of said signals.

13. Optical communications network (20) according to one of the preceding claims, designed such that the registration data contain information regarding the properties of the respective transmission/reception device (26a, 27a) and/or of an interface used thereby, particularly type information relating to the transmission/reception device (26a, 27a) or relating to the respective interface used.

14. Optical communications network (20) according to one of the preceding claims, designed such that the registration data contain information regarding the properties assigned to the respective network node device (21, 22) in a further network, which is connected to the transmission/reception device (26a, 27a) associated with the respective network node device (21, 22).

15. Optical communications network (20) according to one of the preceding claims, designed such that the first and/or the second transmission/reception device (26a, 27a) is a subscriber line device or client device.

16. Optical communications network (20) according to one of the preceding claims, designed such that the data are transmitted using optical signals which have been subjected to wavelength division multiplexing.

17. Network node device (21, 22) for an optical communications network (20) according to one of Claims 1 to 16 for connecting transmission/reception devices (26a, 27a),
**characterized**
**in that** means are provided for managing at least some registration data associated with the transmission/reception devices (26a, 27a) which are connected to the network node device (21, 22).

18. Optical communications method, where optical signals are used to transmit data from a first transmission/reception device (26a) to a second transmission/reception device (27a) via a network node device (21), connected to said first transmission/reception device (26a), in an optical transport network (25), and where a central registration device (37) centrally stores data relating to the registration of the first and second transmission/reception devices (26a, 27a) within Optical communications network (20),
**characterized**
**in that** at least some of the registration data associated with a transmission/reception device (26a, 27a) are managed by that network node device (21, 22) to which the respective transmission/reception device (26a, 27a) is connected.

## Revendications

1. Réseau de télécommunication optique (20) comprenant au moins un premier et un second dispositifs d'émission/réception (26a, 27a), qui sont raccordés respectivement à un de plusieurs dispositifs de noeud de réseau (21, 22) d'un réseau de transport optique (25), par lequel des données peuvent être échangées au moyen de signaux optiques entre le premier et le second dispositifs d'émission/réception (26a, 27a), et un dispositif d'enregistrement central (37), dans lequel sont mémorisées de façon centralisée des données concernant l'enregistrement du premier et du second dispositifs d'émission/réception (26a, 27a) à l'intérieur du réseau de télécommunication optique,
**caractérisé en ce que**,
le réseau de télécommunication optique (20) est conçu de telle sorte qu'au moins une partie des données d'enregistrement attribuées à un dispositif d'émission/réception (26a, 27a) est gérée par ce dispositif de noeud de réseau (21, 22) auquel est raccordé le dispositif d'émission/réception (26a, 27a) respectif.

2. Réseau de télécommunication optique (20) selon la revendication 1, conçu de telle sorte que le dispositif d'émission/réception (26a) respectif est raccordé par un canal de données (30b) au dispositif de noeud de réseau (21) correspondant et au moins une partie des données d'enregistrement est transmise par le canal de données (30b) du dispositif d'émission/réception (26a) respectif au dispositif de noeud de réseau (21) correspondant.

3. Réseau de télécommunication optique (20) selon la revendication 1 ou 2, conçu de telle sorte que le dispositif d'émission/réception (26a) respectif est raccordé par un autre canal de données (30a) au dispositif de noeud de réseau (21) correspondant, par lequel les données utiles proprement dites sont transmises du dispositif d'émission/réception (26a) respectif au dispositif de noeud de réseau (21) correspondant.

4. Réseau de télécommunication optique (20) selon l'une quelconque des revendications précédentes, conçu de telle sorte qu'au moins une partie des données d'enregistrement attribuées à un dispositif d'émission/réception (26a, 27a) est générée par le dispositif de noeud de réseau (21, 22) attribué au dispositif d'émission/réception (26a, 27a) respectif.

5. Réseau de télécommunication optique (20) selon l'une quelconque des revendications précédentes, conçu de telle sorte qu'au moins une partie des données d'enregistrement attribuées à un dispositif d'émission/réception (26a, 27a) est transmise par un canal de données supplémentaire d'un dispositif central de commande de réseau au dispositif de noeud de réseau (21, 22) correspondant.

6. Réseau de télécommunication optique (20) selon l'une quelconque des revendications précédentes, conçu de telle sorte qu'au moins une partie des données d'enregistrement attribuées à un dispositif d'émission/réception (26a, 27a) est transmise par un canal de données (23) du dispositif de noeud de réseau (21, 22) respectif au dispositif d'enregistrement central (37).

7. Réseau de télécommunication optique (20) selon l'une quelconque des revendications précédentes, conçu de telle sorte qu'au moins une partie des données d'enregistrement attribuées à un dispositif d'émission/réception (26a, 27a) ne peut être modifiée que par le dispositif de noeud de réseau (21, 22) auquel est raccordé le dispositif d'émission/réception (26a, 27a) respectif.

8. Réseau de télécommunication optique (20) selon l'une quelconque des revendications précédentes, conçu de telle sorte qu'au moins une partie des données d'enregistrement attribuées au premier dispositif d'émission/réception (26a) peut être appelée du dispositif d'enregistrement central (37) via un canal de données par le dispositif de noeud de réseau (22) qui est attribué au second dispositif d'émission/réception (26a).

9. Réseau de télécommunication optique (20) selon l'une quelconque des revendications précédentes, sur lequel aucune liaison de données directe n'existe entre le dispositif d'émission/réception (26a, 27a) respectif et le dispositif d'enregistrement central (37).

10. Réseau de télécommunication optique (20) selon l'une quelconque des revendications précédentes, sur lequel les données d'enregistrement contiennent des informations relatives à l'adresse de réseau optique attribuée au dispositif d'émission/réception (26a, 27a) respectif dans l'espace d'adresse du réseau de transport optique (25).

11. Réseau de télécommunication optique (20) selon l'une quelconque des revendications précédentes, sur lequel les données d'enregistrement contiennent des informations relatives à l'autorisation d'accès du dispositif d'émission/réception (26a, 27a) respectif à des données enregistrées à l'intérieur du réseau de télécommunication optique (20).

12. Réseau de télécommunication optique (20) selon l'une quelconque des revendications précédentes, sur lequel les données d'enregistrement contiennent des informations relatives aux propriétés des signaux optiques envoyés par le dispositif d'émission/réception (26a, 27a) respectif, en particulier des informations relatives à leur longueur d'onde.

13. Réseau de télécommunication optique (20) selon l'une quelconque des revendications précédentes, sur lequel les données d'enregistrement contiennent des informations relatives aux propriétés du dispositif d'émission/réception (26a, 27a) respectif et/ou d'une interface utilisée par ce dispositif, en particulier les informations sur le type concernant le dispositif d'émission/réception (26a, 27a) ou concernant l'interface respectivement utilisée.

14. Réseau de télécommunication optique (20) selon l'une quelconque des revendications précédentes, sur lequel les données d'enregistrement contiennent des informations relatives aux propriétés appartenant dans un autre réseau au dispositif de noeud de réseau (21, 22) respectif, lequel autre réseau est raccordé au dispositif d'émission/réception (26a, 27a) attribué au dispositif de noeud de réseau (21, 22) respectif.

15. Réseau de télécommunication optique (20) selon l'une quelconque des revendications précédentes, sur lequel le premier et/ou le second dispositif d'émission/réception (26a, 27a) est un dispositif de raccordement d'abonné ou un dispositif de client.

16. Réseau de télécommunication optique (20) selon l'une quelconque des revendications précédentes, sur lequel les données sont transmises à l'aide de signaux optiques multiplexés par répartition en longueur d'onde.

17. Dispositif de noeud de réseau (21, 22) pour un réseau de télécommunication optique (20) selon l'une quelconque des revendications 1 à 16, pour le raccordement de dispositifs d'émission/réception (26a, 27a),
**caractérisé en ce que**
des moyens sont prévus pour la gestion d'au moins une partie de données d'enregistrement qui sont attribuées aux dispositifs d'émission/réception (26a, 27a) raccordés au dispositif de noeud de réseau (21, 22).

18. Procédé de transmission d'informations optique, des données étant transmises à l'aide de signaux optiques d'un premier dispositif d'émission/réception (26a) via un dispositif de noeud de réseau (21), raccordé à ce dispositif, d'un réseau de transport optique (25) à un second dispositif d'émission/réception (27a), et des données concernant l'enregistrement du premier et du second dispositifs d'émission/réception (26a, 27a) à l'intérieur du réseau de télécommunication optique (20) étant mémorisées de façon centralisée dans un dispositif d'enregistrement central (37),
**caractérisé en ce que**
au moins une partie des données d'enregistrement attribuées à un dispositif d'émission/réception (26a, 27a) est gérée par ce dispositif de noeud de réseau (21, 22) auquel est raccordé le dispositif d'émission/réception (26a, 27a) respectif.
